# EUROPEAN PATENT SPECIFICATION

(11) **EP 0 968 940 B1**
(45) Date of publication and mention of the grant of the patent: **05.12.2001**
(21) Application number: 98111953.0
(22) Date of filing: 29.06.1998
(51) Int. Cl.: B65G 47/91, B65B 5/12

(54) **Pick-up device for the automatic packaging of products**
Aufnahmevorrichtung zum automatischen Verpacken von Produkten
Dispositif de ramassage pour l'empaquetage automatique de produits

(43) Date of publication of application: 05.01.2000
(73) Proprietor: SOREMARTEC S.A., 6700 Arlon-Schoppach (BE); Ferrero S.p.A., 12051 Alba (Cuneo) (IT); FERRERO OFFENE HANDELSGESELLSCHAFT m.b.H., D-6000 Frankfurt am Main (DE)
(72) Inventor: Pedrotto, Gianfranco, 12050 Neviglie (Cuneo) (IT)
(74) Representative: Rambelli, Paolo

(56) References cited:
- EP-A- 0 768 254
- FR-A- 2 095 377

## Description

The present invention concerns a pick-up device according to the preamble of Claim 1.

Pick-up devices of this type are known, for example, from US Patent No. US-A-4 832 180 and from European Patent No. EP-A-0 768 254.

In both of these earlier documents, pick-up devices are illustrated that are used for handling food products such as, for example, pralines. The pick-up devices illustrated in these earlier documents comprise a plurality of pick-up elements (usually of the vacuum-operated kind) held on the structure of the device with the capacity to move. Once the products have been taken to a first geometric configuration, the device is then able to deposit them after having combined them in a second geometric disposition different from the first.

The object of the present invention is to develop further the characteristics of flexibility exhibited by the arrangements described in the aforesaid earlier documents, especially as regards the possibility of simultaneously generating, starting from a set of products taken, for example, from a production line, several groups of products arranged according to different geometries. All of this takes account of the possible use of these groups for the production of complex packages such as, for example, packages having several layers in which the outer shape of the package (spherical, bell-shape, etc) must, to a certain extent, be mirrored by the distribution of the products at the various levels.

According to the present invention, this object is achieved by virtue of a device having the characteristics specifically referred to in the following claims.

The invention will now be described, purely by way of non-limitative example, with reference to the accompanying drawings in which:

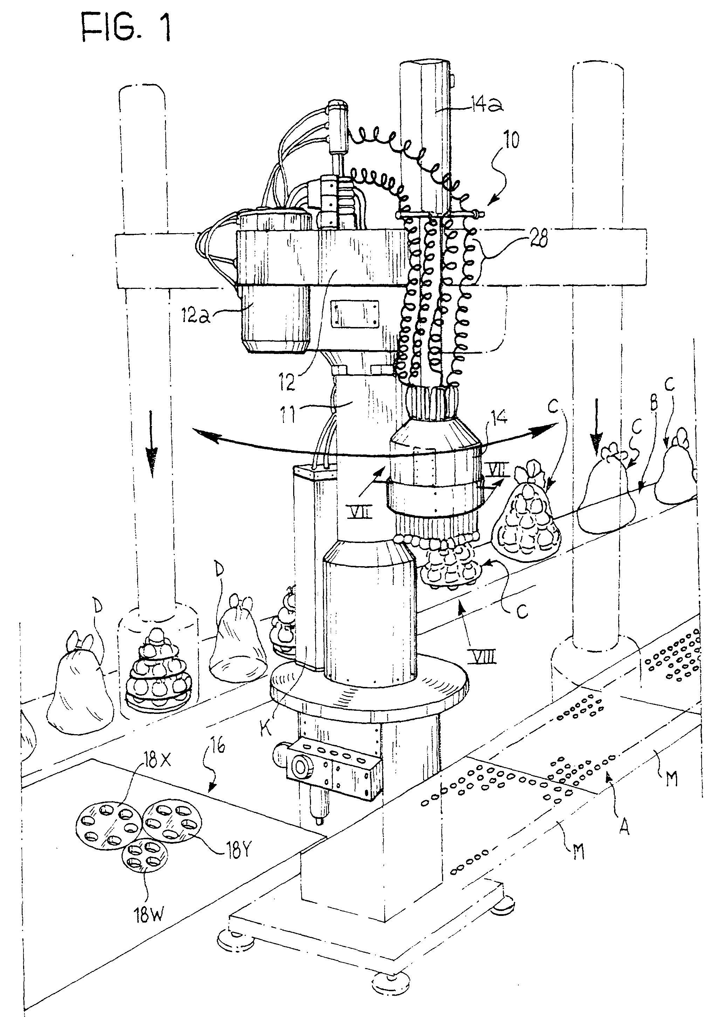

- Figure 1 is a general perspective view of a device according to the invention;
- Figure 2 is a perspective view of a package that can be produced with the device according to the invention;
- Figures 3A to 6A and the corresponding Figures 3B to 6B schematically illustrate the handling action of the device according to the invention;
- Figure 7 is a sectional view taken on the line VII-VII of Figure 1, shown on an enlarged scale; and
- Figures 8 and 9 correspond substantially to a view according to the arrow VIII of Figure 1, showing two possible operating positions of part of the device shown in Figure 7.

In the accompanying drawings, the reference numeral 10 generally indicates a device for the automatic manipulation of products (a so-called manipulation robot) useable, for example, in an installation for the automatic packaging of food products. It is however clear that the fields of application of the invention are varied and are certainly not limited to that referred to below for clarity and simplicity of illustration.

In the particular embodiment illustrated - which is as follows - the device 10 is intended to operate between an input conveyor belt (with respect to the device), indicated A, and an output conveyor belt (again with reference to the device 10), indicated B.

The conveyor belt A is here represented in the form of a conveyor belt on which a succession of moulds M advances, provided with upwardly facing cells and defining an ordered array (for example, a rectangular network). Corresponding products P made, for example, from spherical pralines that are unwrapped or, preferably, that have already been wrapped, possibly provided with receiving cases, are accommodated within the cells.

Conveyor belts of this type are widely known in the art: by way of example, reference can be made to EP-A-0 583 740. The products P can be, for example, pralines of the type sold by the companies of the Ferrero group under the trade names Ferrero Rocher, Confetteria Raffaello, Tonus, Giotto, etc.

In any case, both the specific geometry of the initial array of the products P on the input conveyor A, as well as the specific characteristics of the products themselves are not in themselves relevant or essential in order to understand and/or carry out the invention.

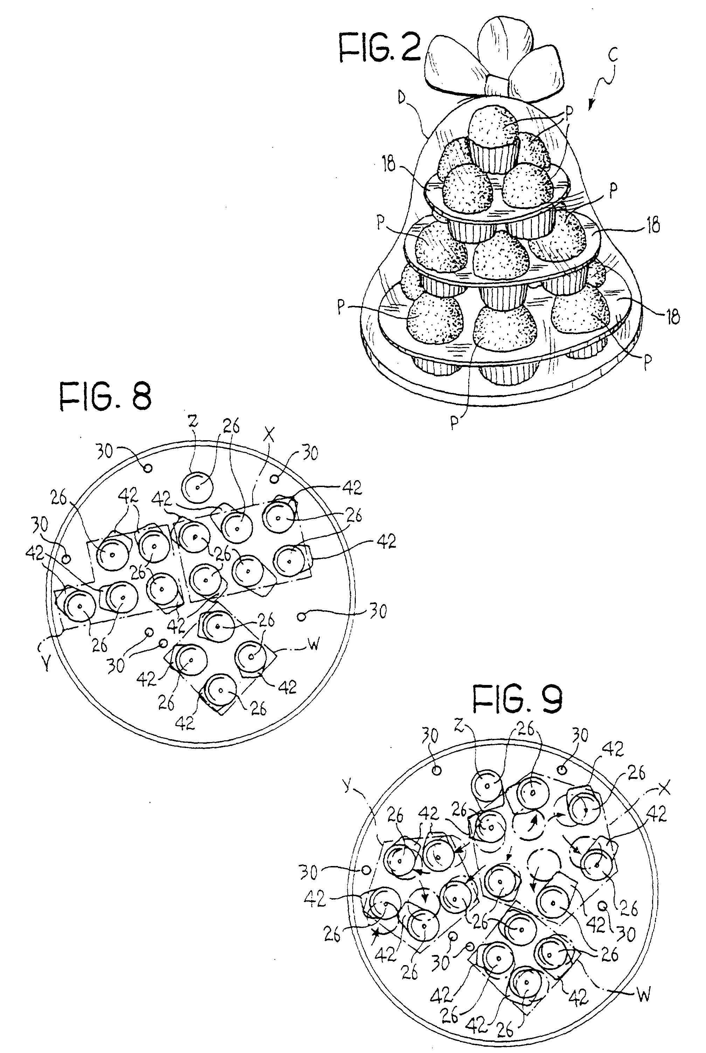

The output conveyor B is a conveyor belt on which, in the embodiment illustrated (which, as is emphasised once more, is not limitative of the invention) the lower parts or bases of packages C advance. In the embodiment illustrated (see Figure 2), the packages C are generally bell-shape, being closed at the top by a transparent bell-shape cap D. Still referring to Figure 2, it is possible to see that there are four "layers" of product P within each package C, that is, four groups of product comprising, respectively and from the base upwards, six products P, five products P, four products P and one product at the top, giving a total of sixteen products P in all.

Essentially, the function of the device 10 is to take the products P from the input conveyor A - where the products themselves are arranged in moulds M according to a matrix-type array (for example, an array having square, rectangular or even rhomboidal etc networks) - so as to arrange them during the transfer to the output conveyor B in respective groups intended to be put in the packages C. With reference to the possible configuration of the packages C, which is indicated above, the function of the pick-up device 10 is from time to time to take a group of sixteen products P from the conveyor A and then arrange them in four groups comprising, respectively, six, five, four and one product, these groups being intended to constitute the various layers of the package D formed on the output conveyor B.

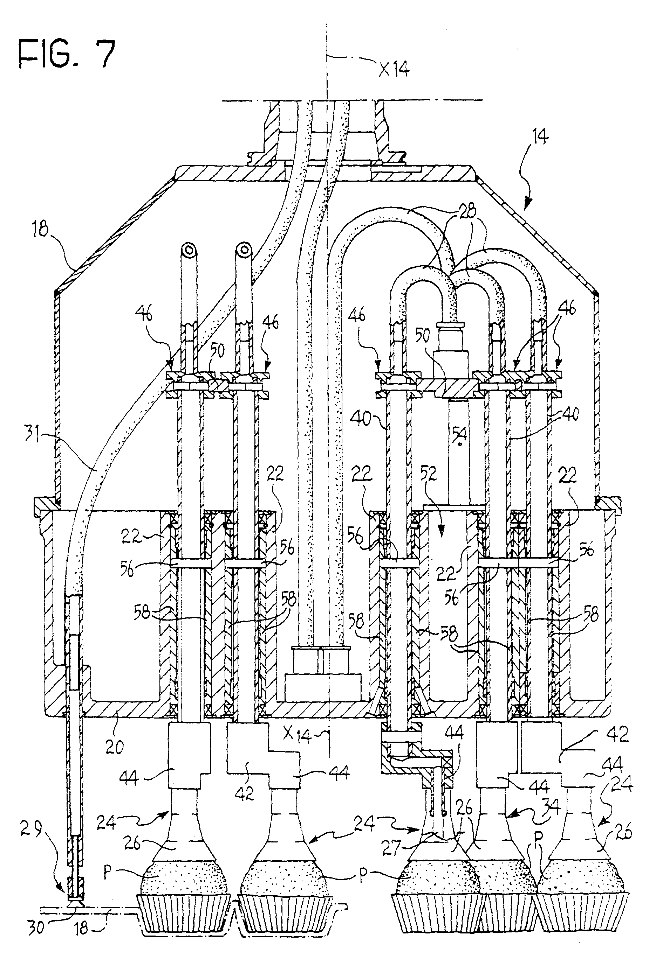

According to a known arrangement, the device 10 has a general flag-like configuration and comprises essentially a column 11 on the upper end of which a horizontal arm 12 is mounted. The arm 12 is capable of traversing movement in a substantially horizontal plane caused by the action of motor means 12a. The same arm 12, at its free or distal end, carries a head or pick-up device 14 with associated respective motor means 14a which enable vertical translation and, preferably, rotation about the related vertical central axis X14 (Figure 7) as well.

According to a typical configuration of robotic applications (according to known criteria, therefore, which do not require detailed description here), the motors 12a and 14a carry associated operation and control means which enable them to impart to the pick-up head 14 a cyclic movement comprising the following stages:
- locating the pick-up head 14 above the input conveyor A and lowering the head 14 itself, together with the pick-up elements associated therewith (elements which will be better described below), in order to remove the products P accommodated - in an ordered array - in the moulds M on the input conveyor A;
- lifting the pick-up head 14 with the consequent removal of the articles P from the moulds M;
- moving the head 14 towards an intermediate station 16 (having the characteristics better described below) where the products P, already arranged in distinct groups, are located in respective receiver vessels 18;
- advancing the pick-up head 14 from the intermediate station 16, and consequently taking the vessels 18, together with the products P, for the subsequent positioning of the head 14 over the output conveyor B;
- subsequently lowering the head 14 in order to deposit the various groups of product P in the corresponding vessels 18 at the bottom of the packages C, with the possible collection and deposition of the cap D on the respective base to complete the individual package C; and
- disengaging the head 14 from the package C thus completed and subsequently returning it to the starting position above the input conveyor A.

The general illustration of the operating cycle of the device 10 constitutes an introduction to the detailed description of the device 10 itself, and also enables an understanding that the general flag-like structure illustrated here (the column 11 and the arm 12) constitute just one example of the many possible embodiments of a robot structure of the type described above. In order to indicate a possible alternative arrangement, the head 14 could be mounted at the distal end of an arm pivoted so as to be able to move the head 14 to the various positions described above. The manufacture of these articulated arms constitutes a current solution in the field of robotic technology. A detailed description of the related arrangements is therefore superfluous, and is also irrelevant in order to understand and illustrate the invention. The flag-like structure referred to previously, and to which reference will be made again below, can thus be replaced with any equivalent handling structure.

Passing on to examine in more detail the structure of the head 14 with reference to Figure 7, it can be noted in the embodiment illustrated that it includes a kind of downward-facing bell-shape casing 18 supported at its (upward facing) base part by the arm 12 of the handling structure described above. The bell-shape body 18 is closed at its base by a plate 20 where there is provided a plurality of sleeves 22, each defining a seat for mounting a related pick-up element 24.

Preferably, the pick-up elements 24 are of the type which operate at sub-atmospheric pressure. Essentially, the active pick-up part of the elements comprises a suction formation 26 formed from a pliable material, provided with an axial cavity 27. Each cavity 27 communicates via a complex of tubes 28 (of known type) with a source of sub-atmospheric pressure such as a vacuum pump (not illustrated) mounted, for example, in the base part of the structure of the device 10.

According to known criteria (in relation to which reference may be made, for example, to the documents US-A-4 832 180 or EP-A-0 768 254, already mentioned in the introduction to the present description), the pick-up elements 24 can be brought into contact with the products P to be lifted, thus in such a way that, upon activating the vacuum lines 28 communicating with the axial cavities 27, the products P themselves are held by the suction pick-up formations 26 so as to follow the elements 24, therefore the head 14, in the general transfer to the intermediate station 16 and the output conveyor B described above. At the output conveyor B, deactivating the vacuum lines 28 causes the pick-up formations 26 to release the products P which are therefore deposited on the output conveyor B in the desired positions.

The activation and deactivation of the pick-up elements 24, their movement with respect to the head 14 (in terms which will be described below) and the general movement of the pick-up head 14 itself in the cycle described above are controlled automatically (according to known criteria) by a central processing device K which supervises the operation of the device. This can be, for example, a programmable device of the type currently known as a PLC (an acronym for "Programmable Logic Controller").

The reference numeral 29 indicates further pick-up elements mounted on the base plate 20 (or, generally, on the head 14), the structure of which is substantially similar to the structure of the pick-up element 24 (with an exception as regards the characteristics of movement of these latter, which will be described below).

At the distal end, below the respective element 29, are thus present pick-up formations 30 substantially similar to suckers (usually smaller than the suckers 26 of the element 24), provided with an axial cavity in communication with vacuum lines 31 substantially similar to the lines 30, even as regards the connection to the sources of sub-atmospheric pressure.

The longitudinal extension of the pick-up elements 29 (that is, in the example illustrated, the distance between the suckers 30 and the base plate 20 of the head 14) is, in general, correlated to the dimensions of the products P, and therefore the dimensions of the vessels 18, and the length of the pick-up elements 24, in particular the length (always understood as the distance between the suckers 26 and the plane of the plate 20) of the elements 24 themselves in their most retracted position within the head 14.

In practice, this is the operating condition referred to specifically in Figure 7. Here, it can be seen that the length of the elements 24 is chosen so that when the elements 24 are in the position of maximum retraction within the head 14, the pick-up formations 30 of the elements 29 can engage the peripheral edge (or, in general, the flat core part) of the vessels which accommodate the products P held by the pick-up formations 26 of the pick-up elements 24 within their cells. This is schematically represented in broken outline in the lower left hand part of Figure 7.

This relative position of the elements is achieved when the head 14 is positioned at the intermediate station 16 in order to locate the products P taken from the line 14 in the cells of the vessel 18, in order then to take the vessels 18 with the products P. In this way, the vessels 18, which accommodate the products P in their cells, follow the head 14 and the products P in the subsequent movement to the output conveyor B.

Returning to the illustration of the elements 24, it is noted that many of them have a flag-like structure which enables the relative position of the products P to be changed during the transfer from the conveyor A to the conveyor B (with a possible intermediate stop represented by the station 16).

In a minimal configuration, the head 14 can have just two pick-up elements 24. In this case, it is sufficient that just one of these elements has the flag-like structure described above; the other pick-up element can thus remain fixed, the possibility however remaining of a general retraction/extension with respect to the head 14. This explains why general reference is made in the claims below to the fact that at least one of the elements 24 has the structure which will now be described.

In the embodiment illustrated here, the aforesaid flag-like structure has been adopted for all of the elements 24 of the head 14, with exception of the element 24 (represented in the highest position in Figures 8 and 9) intended to act on the product P located at the top of the package C (Figure 2).

To this end, all of the elements 24 include a stem part 40 mounted within a respective sleeve 22 of the head 14, capable of a relative longitudinal sliding movement with respect to the sleeve 22 (therefore, an extraction/retraction movement with respect to the head 14). All of the elements 24, with the exception of that intended to act on the product P in the summit position, are also capable of a corresponding rotation about the main axis of the stem 40 within the sleeve 22.

To this end, support elements in the form of bearings, bushings, or similar elements facilitating relative movement may be interposed between the sleeves 22 and the stems 40.

In all of the elements 24 intended to rotate, the stems 40 (which are usually hollow in order to enable the vacuum lines 28 to pass within them) carry an orientable arm 42 at their lower end, which arm is substantially similar to a handle which transforms the rotation of the respective stem 40 about its main axis into an orbital movement of the distal end 44 of the arm itself.

The actual pick-up element, that is, the sucker formation 26, is mounted on the distal end 44 of the arm 42 (this is also usually hollow in order to enable the vacuum lines to pass through).

Consequently, when the stem 40 rotates about its axis, the related suction pick-up formation 26 describes a corresponding arcuate path, the characteristics of which are essentially identified by two factors, that is, the length of the arm 42 (in practice, measured between the main axis of the stem 40 and the axis of the suction formation 26) and the angular extent of the rotation of the stem 40.

The axial movement of each stem about the corresponding sleeve 22 can be controlled by various means.

For example, in the arrangement illustrated here by way of example, each stem 40 has, at its end opposite the arm 42 (thus, at the end projecting into the head 14), an annular flange or collar 46 having a channel slidingly engagable by an arm or pin 50 carried and moved within the bell 14 in the direction of the axes of the stems 40, generally parallel to each other, by one or more actuators 52.

In a typical embodiment, this can be one or more fluid actuators (typically pneumatic), each including a stem 54. The or each actuator 52 is connected to a corresponding source of fluid under pressure (or, possibly, under reduced pressure, it being possible to consider the same pump that creates the sub-atmospheric pressure in the lines 30 and 31), and acts with its stem 54 through one or more biasing elements, such as the element 50, on the collars 46 associated with the stems 40.

The operation of the actuator or actuators 52 causes the stems 20 to move within the sleeves 22 in a way which, depending on the direction of operation, causes:
- the projection of the stems 40 outside the head 14 (with a consequent lowering of the pick-up elements 24 which move downwards with respect to the body of the head 14), and
- the return of the stems 40 into the head 14, with the consequent raising of the pick-up elements 24, the suction formations 26 of which move closer to the base plate 20 of the head 14 to reach, at the upper end of the return stroke, the position schematically illustrated in Figure 7.

In each of the elements 24 intended to perform the rotation of the respective arm 42, as well as the vertical sliding movement described above, the reference numeral 56 indicates a pin element (or an equivalent functional element) associated with each stem 40 and configured so as to project beyond the perimeter of the stem 40 on at least one side of the stem 40 itself. This is all so as to be able slidingly to engage one or more channels or tracks 58 provided on the wall of the related sleeve 22 and intended to act as cams in order to correlate the axial sliding movement of the stems 40 within the sleeves 22 with a corresponding rotation of the stems 40 with respect to the same sleeves 22.

In other words, the function of the channels or tracks 58 acting as cams is to co-operate with pins 56 such that a movement to orientate the arm 42, that is, a predetermined movement of the pick-up formation 26 and the product P possibly carried thereby along an arcuate pathway, corresponds to the axial sliding of the pin 40 along the sleeve 22. It is therefore clear that the particular arrangement illustrated here (that is, the head parts of the pins 56 being slidingly engagable with the channels or tracks 58 of the sleeves 22) constitutes one of many possible arrangements for the kinematic control that can be adopted to produce, as the result of the extension and return of the stems 40 with respect to the head 14, a corresponding orientation movement of the arms 42 and, therefore, a movement of the suction pick-up parts 26.

As possible alternative arrangements for kinematic control, reference can be made to a complementary arrangement in which the pin parts project from the peripheral walls of the sleeves 22 and corresponding channels or tracks 58 are provided on the outer walls of the stems 40. Again, pin elements can be considered that, instead of projecting symmetrically with two head parts on opposite sides of the stems 40 in order to engage more or less symmetrical slots or channels 58, they project on one side only, engaging a single slot or channel and acting as a cam. Again, a further equivalent arrangement is to produce the stem 40 in the form of a prism having a transverse polygonal section and then providing a corresponding shaped aperture in the sleeve 48 acting, in practice, as a nut, or a complementary arrangement. A yet further possible variant is to reverse the role of the stems 40 and the sleeves 22, carrying out the relative axial sliding movement by keeping the stems still and sliding the sleeves, or by sliding both the stems 40 and the sleeves 22. In any case, with the object in question remaining the same, the adoption of possible operational variants constitutes a design function within the capacity of the man skilled in the art.

The arrangement illustrated and described here is advantageous in that it constitutes a good summary of the requirement of ensuring the structural simplicity (also being relevant to mounting and maintenance), the requirement of ensuring the precise movement of the parts and the requirement of ensuring a high resistance to wear in use.

Tests conducted by the applicant demonstrate that, in the context of an industrial installation, a device such as the device 10 illustrated above is capable of producing a package D of the type illustrated in Figure 2, containing sixteen products P, in a time interval of around ten seconds or slightly more. The device illustrated is therefore intended to perform several hundreds of packaging cycles every hour in a more or less continuous operation in the context of a packaging installation.

Figures 8 and 9 can be seen as two theoretical plan views from the base of the head 14 with the suction pick-up formations 26 located, respectively:
- in positions corresponding to the position of the products P within the moulds M on the conveyor A, therefore, for example, in an ordered array with a square or rectangular network, (Figure 8) and,
- for the division of the products themselves into different groups, the suction pick-up formations 26 which assume - in groups - relative positions corresponding to the positions that the products P must assume at the moment of their location in the vessels 18, and thus for the purpose of their location within the package D (Figure 9).

In particular, in Figure 9 it can be seen that the suction pick-up formations 26 are organised in four groups, respectively indicated X, Y, W and Z.

The group X comprises six suction pick-up formations 26 (capable of lifting six products) disposed in positions corresponding to the vertices of a hexagon.

The group Y comprises five formations 26 (therefore, five products) disposed at the vertices of a pentagon.

The group W comprises four formations 26 (therefore, four products) disposed at the vertices of a square.

The group Z can be seen as a kind of degenerate group (in the mathematical sense of the term) acting, in practice, as a single formation 26 which holds the product P intending to be located in the summit position.

The interpretation of the geometry of Figure 8 is a little more complex.

Here, it can in fact be seen that the position of the pick-up formation 26 corresponding to the group Z is unchanged in both Figures 8 and 9.

In the geometry of Figure 8, the eleven formations 26 of the groups X and Y are arranged in two adjacent lines having six and five formations, respectively.

On the other hand, the group W includes four formations 26, always disposed on the vertices of a square. Passing from the geometry of Figure to the geometry of Figure 9, there is thus a variation in the sense of a fixing of the array of the formations of the group W.

In the geometry of Figure 8, the pick-up formation of the groups X, Y and W are, in fact, located at the same distance from the adjacent formations as the distance separating the products P when they are in the moulds M of the conveyor A (Figures 3A-6A).

In these Figures, respective groups of products P are indicated in broken outline, being those originally located within the same mould M (on the conveyor A).

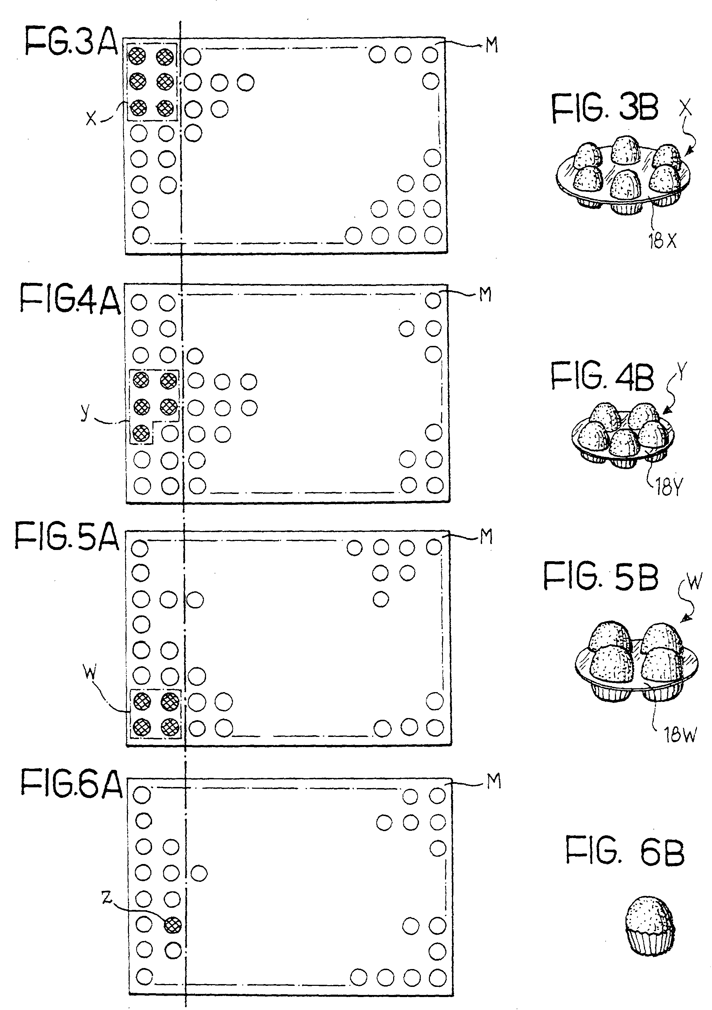

It is therefore understood how, by lowering the head 14 onto the mould M (with the elements 24 usually extended to the outside so that the formations 26 are arranged according to the geometry of Figure 8), the head 14 itself is able initially to take eleven products P located adjacent each other in the mould M (Figures 3A and 4A) with the eleven pick-up formations 26 of the groups X and Y located in the two adjacent lines of five and six formations visible in Figure 8. The head 14 can then move (while, preferably, the eleven pick-up elements 24, having gripped the products P, are returned inside the head 14 by moving upwards, so that they do not interfere with the movement), usually by rotating slightly so as to pick up the other four products P shown in the drawing 5A with the four pick-up formations 26 of the group W.

The same operation is finally repeated (usually, after having also returned the pick-up elements of the group W with the related products towards the interior of the head 14, that is, upwards) for the pick-up formation 26 constituting the group Z. This latter takes the sixteenth product P indicated in Figure 6A from the mould M.

Once this last pick-up element 26 has also been returned upwards, the head 14 is now located in the condition shown in Figure 7, that is, with all of the pick-up elements 24 returned upwards together with the respective products P held by the pick-up formations 26 arranged according to the geometry of Figure 9, that is, with the products held by the pick-up formations 26 of the groups X, Y and W already arranged at the vertices of a hexagon, a pentagon, and a square, that is, according to the geometries indicated in Figures 3B to 5B (as can obviously be deduced, the positioning of the sixteenth product P corresponding to the group Z is, in fact, invariable).

Consideration of the sequence of Figures 3A to 6A leads to the understanding that the aforesaid lifting operation can be repeated successively on respective portions of the mould M until all of the products have been lifted (96 in total, arranged in twelve lines each having eight elements, in the embodiment illustrated) located in the mould M itself.

The comparison of Figures 8 and 9 enables it to be understood that the passage of each pick-up formation 26 from the position illustrated in Figure 8 to the position illustrated in Figure 9 corresponds to a movement along an arcuate path identified, with respect to a corresponding centre of rotation, by a radius and a wide angle of movement.

Apart from the limits that arise from evident problems of topology - any point on the plane of Figure 9 can be reached from any point on the plane of Figure 8 by means of a movement along an arcuate path of the type indicated above. Naturally (even if this possibility is not specifically provided for in the embodiment illustrated in the drawings), this movement can also occur by way of a change of the radius of the arcuate path. This arrangement corresponds, with a view to the production of the head 14, to the possibility of producing one or more pick-up elements 24 the arms 42 of which, instead of being of fixed length, as in the case of the examples illustrated in the drawings, are selectively variable in length. This arrangement can be achieved, for example, by producing the arms 42 with a telescopic structure having associated means for controlling the variation in length, for example, by pneumatic operation or, more simply, associating cam follower elements at the distal ends 44 of these arms, intended to co-operate with cams mounted on the plate 20 so as to achieve the variation in length of the arm 42 during the rotation as a consequence of the rotation of the respective stem 40 within the sleeve 22. This arrangement has not been illustrated in the drawings in order to avoid an overly complex representation: in any case, it is to be understood as being included within the ambit of the invention.

From the above it follows that given a certain array of products P, if their position on the conveyor A is known, with the desired position of each product in order to insert it into the package C being established, it is possible to define an arcuate path corresponding to the movement between the position illustrated in Figure 8 and the position illustrated in Figure 9.

This path, once identified, enables the establishment of:
- the length of the arm 42 intended to support the suction pick-up formation 26 that acts on each product P in question; and
- the extent of the angular movement conferred on the corresponding stem 40 (by means of the corresponding shape of the cam element represented here by the tracks 58) so that, as a result of the passage of the stems 40 from the extended position, corresponding to the gripping of the products P by the elements 42, to the retracted position represented in Figure 7, the various suction pick-up formations 26, and therefore the product P carried thereby, move from the configuration shown in Figure 8 to that shown in Figure 9.

The pick-up element 24 which acts on the product P located at the top of the package C is, of course, excluded from this discussion (in the embodiment illustrated).

The structure and characteristics of the unit 16 will now be briefly illustrated. This unit (the presence of which is not, however, essential to the invention) is essentially constituted by a normal feeder of thermo-formed vessel elements (currently known as "acetates") or similar elements (for example, made from paper) provided with cells intended to accommodate the products P.

In the embodiments illustrated, each vessel is fed in an ordered stack to the station 16 which, in reality, comprises several receiver units, that is, in the embodiment illustrated, three thermo-formed vessels indicated respectively 18X, 18Y and 18W comprising respectively six, five and four cells connected to a flat core part. More specifically, each of the vessels 18X, 18Y and 18W have cells arranged at the vertices of a hexagon, a pentagon and a square in positions substantially identical to the positions of the pick-up formations 26 (and of the product P carried thereby in the geometry of Figure 9).

The manufacture of receiver vessel elements of this type by means of thermoforming operations and, in a corresponding way, the ordered supply thereof in a pick-up position at the station 16 occur according to criteria known in the art and which do not require illustration in detail here.

The operating cycle of the device 10, although already described above, provides that in the initial position for taking the products P from the conveyor belt A the elements 24 of the head 14 are at one of the end positions of the sliding movement of the stems 40 within the sleeves 22: that is, with the stems 40 in the retracted position within the head 14 or (according to the preferred arrangement specifically referred to in the drawings) with the stems 40 projecting downwards out of the bell 14.

In these conditions, the arms 42 of the various stems 40 hold the pick-up formations 26 in the various positions represented in Figure 8, that is in positions corresponding to the array in which the products P are arranged on the conveyor A.

The head 14 then acts on the products P in question, lifting them by means of the pick-up formations 26 (conveniently activated under vacuum, for example, by the source S) as described above, thus taking them to the operating condition represented in Figure 7.

In these conditions, the head 14 can then be completely raised from the conveyor A and transferred to the station 16.

The head 14 can then descend vertically onto the station 16, carrying the products P to engage the corresponding cells of the vessels 18X, 18Y, 18W located for this purpose in a geometry corresponding to the geometry of the formations 26 represented in Figure 9.

The lowering of the head 14 with respect to the station 16 (referring to a relative movement in which, in a less preferred embodiment, the station 16 could be configured so as to raise the vessels 18X, 18Y and 18W towards the head which is kept at a constant height) carries the suction pick-up formations 30 of the pick-up elements 29 to engage the flat core part of the vessels in question (see Figure 7, bottom right). Consequently, by virtue of the activation of the vacuum lines 31, when the head 14 is again moved away from the station 16, not only the products P, but also the vessels 18X, 18Y and 18W in which the products P themselves are accommodated, follow the head 14 in the movement towards the conveyor B.

At this point, the head 14 can move into an engagement position with the conveyor belt B, effecting a series of relative movements which cause, in sequence:
- the deposition of the vessel 18X containing the six products P on the base of the package C,
- the deposition of the vessel 18Y containing the five products P on top of the previously deposited six products in the vessel 18X,
- the deposition of the vessel 18W containing the four products P on top of the vessel 18Y and its five products P and, finally,
- depositing the remaining product P on top of the pile thus formed, on top of the vessel 18W and its four products.

Naturally, each deposition operation involves the selective deactivation of the pick-up elements 24 and 29 acting on the products P and the vessel from time to time involved therewith. All of this, together with the various movements for orientating the head 14 needed in order to perform the operations described, can be obtained by means of the control device K, programmed according to known criteria that are therefore not essential in order to understand the embodiment of the invention.

At this point, using any of the pick-up elements 24 or 29, the head 14 can also be used to collect the top D of the package, lifting it and depositing it on top of the products already stacked to complete the package C.

The head 14 can then be returned to the starting position above the conveyor A, controlling the return movement of the stems 40 to the position described above for taking a new group of products P from the conveyor A.

The basic principle remaining the same, the arrangement according to the invention can be made in numerous possible embodiments.

In the first place, although the preferred embodiment described above provides for the use of pick-up formations 26 and 31 of the suction type, which thus operate in a vacuum, it is entirely clear that the arrangement according to the invention lends itself to the use of any kind of pick-up element (for example, pincer or fork-like elements operated in different ways).

Secondly, it is not at all essential that the head 14 acts on the conveyor A in order to lift the products P located in the moulds M, in a stationary condition, that is, with the conveyor A momentarily stopped. The head 14 and the related robot that forms part of it can, in fact, be configured - according to known criteria - in such a way as to "follow" the conveyor A so as to take the product P therefrom without the conveyor having to be stopped. Naturally, this also applies to the conveyor B, and possibly to the intermediate station 16, the presence of which corresponds however to a preferred but not essential arrangement for the invention.

Similarly, the movement for the orientation of the arms 42 as the result of the rotation of the stems 40 about the sleeves 22 has been shown here as a movement between two end positions, as represented in Figures 8 and 9. It is therefore possible to envisage the division of the axial translation of the stems 40 into several phases or stages corresponding to different relative positionings of the pick-up formation 26 and the products P carried thereby. For example, a device 10 according to the invention can be used to serve, starting from an input conveyor A, two or more output lines intended to receive the products arranged in different configurations. Consequently, the device 10 can take the products P with the stems 40 in a first position, corresponding to a first position of the pick-up formations 26, in order to move towards a first output line while the stems 40 perform a first portion of their axial translation stroke within the sleeves 22 so as to carry the pick-up formations 26 and the products P held thereby to a first configuration, utilisable, for example, for loading the products on a first output line. Once this first delivery operation is completed, the head 14 can continue the stroke towards at least one further output line while the stems 40 proceed in the axial movement stroke which carries the pick-up formations 26 and the products P that have remained associated therewith (a certain fraction of product has, in fact, been deposited on the first output line) to a second configuration utilisable for loading a second output line. It is clear that this arrangement can be extended to the loading of any number of output lines.

It is also possible to utilise a device 10 in a complementary way, that is, to load products arranged in a predetermined array on an output line by lifting the products themselves from two input lines on which the products themselves are in groups or configurations having different geometries from each other and different also from the final desired geometry.

The theories behind the use set out above can be combined by loading several output lines from several input lines with a corresponding change in the regrouping configurations of the products to be lifted and deposited.

Variations in use of this kind, even though unusual and unknown in the field for the automatic packaging of confectionery products, may however be necessary in other fields, for example, for the handling of electronic components or similar products.

In addition, it is also possible to envisage the combined use of more devices 10 of the type described in installation configurations including, for example, lifting the product P from an input line A by two or more devices 10 of the type described above, each being provided with a related output line. In a complementary way, it is possible to envisage the association with a single output line of two or more devices 10 of the type described above, each lifting the products from a respective input line. In this case also, the possible further combinations of the arrangements set out are clear.

It therefore follows that, the principle of the invention remaining the same, the details of construction and the embodiments can be widely varied without by this departing from the scope of the present invention as defined in the accompanying claims.

## Claims

1. A pick-up device comprising a pick-up head (14) and a plurality of pick-up elements (24) selectively movable relatively to the head between at least first and second positions so as to enable the lifting of products (P) in a first relative spatial disposition and the deposition of the products (P) themselves in a second relative spatial disposition, **characterised in that** the said pick-up elements (24) include:
- a vertical stem (40) capable of a relative axial sliding movement with respect to a complementary element (22) fixed to the head (14) and an arm (42) mounted on the said stem (40) and extending radially therefrom and having a distal end (44) carrying associated pick-up means (26) for lifting a product (P), and
- subsidiary kinematic means (56, 58) interposed between the said stem (40) and the said complementary element (22) so that a rotating orientation movement of the said arm (42) and a consequent movement of the said pick-up means (26) along a generally arcuate path about the axis of the stem (40) correspond to the relative axial sliding movement of the said stem (40) and the said complementary element (22).

2. A device according to Claim 1, **characterised in that** the said arm (42) has a fixed length, so that the said arcuate path is substantially identified by the length of the said arm (42) and the size of the orientation movement of the said arm (42) as a consequence of the axial movement of the said stem (40).

3. A device according to Claim 1 or Claim 2, **characterised in that** the said subsidiary kinematic means include a pin (56), a stem (40) as well as at least one channel (58) slidingly engaged by the said pin (56).

4. A device according to any of Claims 1 to 3, **characterised in that** the said complementary element (22) is constituted by a sleeve (22) which receives therein the said stem (24) having a capacity for relative axial sliding.

5. A device according to Claim 3 and Claim 4, **characterised in that** the said pin (56) passes through the said stem (40) projecting in diametrically opposed positions with respect thereto, and **in that** the said complementary element in the form of a sleeve (22) is provided with two diametrically opposed channels (58) slidingly engaged by the ends of the said pin (56).

6. A device according to any preceding claim, **characterised in that** the said stem carries an associated collar part (46) provided with an outer channel, and **in that** the said stem (40) has associated control means (50 to 54) slidingly co-operating with the channel of the said collar part in order to control the axial sliding movement of the said stem (40).

7. A device according to Claim 1 or Claim 6, **characterised in that** the said stem (40) carries associated motor means for controlling the said relative axial sliding movement, the said motor means comprising a fluid actuator (52).

8. A device according to any preceding claim, **characterised in that** the said pick-up means (26) are vacuum pick-up means, and **in that** the said stem (40) and the said arm (42) have passages (27) for the application of a level of sub-atmospheric pressure to the said vacuum pick-up means (26).

9. A device according to Claim 4, **characterised in that** the said pick-up head (14) has a base plate (20), and **in that** the said sleeve (22) is fixed to the said base plate (20).

10. A device according to any preceding claim, **characterised in that** a plurality of the said pick-up elements (24) is arranged in respective groups (X, Y, Z), the pick-up elements (24) in each group being collectively movable between at least a first relative arrangement for picking up a respective group of products (P) and at least a second relative arrangement for the deposition of the products (P) themselves.

11. A device according to any preceding claim, **characterised in that** it includes at least one other pick-up element (24) having associated respective pick-up means (26) configured so as to perform exclusively the said relative axial movement, without this movement being along an arcuate path.

12. A device according to any preceding claim, intended to act on products (P) capable of being introduced into at least one receiver vessel (18X, 18Y, 18Z), **characterised in that** it includes a pick-up head (14) on which is mounted, in addition to the said pick-up elements (24), at least one further auxiliary pick-up element (29) capable of co-operating with the said at least one vessel for holding on the said pick-up element (14) at least one vessel (18X, 18Y, 18Z) in which at least one product (P) held by the said at least one pick-up element (24) is received.

13. A device according to Claim 12, **characterised in that** the said auxiliary pick-up element (29) is vacuum-operated.

14. A device according to Claim 9 and Claim 12, **characterised in that** the said auxiliary pick-up element (30) projects from the said base plate (20) to an extent corresponding to the distance separating the said base plate (20) from a flat core of the said vessel with the said products (P) received in the said at least one vessel with the stems (40) of the said pick-up elements (24) in one of the end positions of the said extend and return movement.

15. A device according to Claim 10 and Claim 12, **characterised in that** with each of the said groups (X, Y, W, Z) of pick-up elements (24) there is associated at least one respective auxiliary pick-up element (30) capable of co-operating with a respective vessel (18X, 18Y, 18W) for receiving the products (P) in the respective group.

16. A device according to any preceding claim, **characterised in that** the said pick-up elements (24) are mounted on a pick-up head (14) with associated actuation means (11, 12, 12a, 14a) selectively controllable (K) between:
- at least a first operating position in which the said at least one pick-up element (24) located in the said at least one first position lifts one of the said products (P), and
- at least a second operating position in which the said at least one pick-up element (24), carried in the said at least one second position, deposits the respective product (P).

17. A device according to Claim 12 and Claim 16, **characterised in that** the said actuation means (11, 12, 12a, 14a) are configured to carry the said pick-up head (14) during the movement between the said first operating position and the second operating position through at least one intermediate operating position (16) in which the said pick-up elements (24) locate the respective products (P) in a respective receiver vessel (18X, 18Y, 18Z).

18. A device according to Claim 12 and Claim 17, **characterised in that** in the said intermediate operating position, the said auxiliary pick-up element (29) engages the said respective vessel (18X, 18Y, 18Z).

19. A device according to Claim 10 and Claim 16, **characterised in that** the said actuation means (11, 12, 12a, 14a) are configured to move the said pick-up head (14) to at least one of the said first and second operating positions, so as subsequently to achieve the lifting and the deposition of the products (P) in the said groups.

20. A device according to Claim 19, **characterised in that** the said actuation means (11, 12, 12a, 14a) are configured so as to deposit the said groups of products in superimposed positions.

21. A device according to any of Claims 16, 19 or 20, **characterised in that** the said pick-up head (14) further includes at least one pick-up element (24, 29) capable of selectively lifting a cover element (D) in order to deposit it on the products (P) deposited in correspondence with the said operating position.

## Patentansprüche

1. Aufnehmvorrichtung mit einem Aufnehmkopf (14) und mehreren Aufnehmelementen (24), die wahlweise bzgl. des Kopfes zwischen wenigstens einer ersten und einer zweiten Position derart bewegbar sind, dass das Anheben von Produkten (P) in einer ersten relativen Raumanordnung und das Absetzen derselben Produkten (P) in einer zweiten relativen Raumanordnung ermöglicht wird, **dadurch gekennzeichnet, dass** die Aufnehmelemente (24) folgendes aufweisen:
- einen vertikalen Stiel (40), der zu einer relativen axialen Gleitbewegung bzgl. eines komplementären Elements (22) in der Lage ist, das an den Kopf (14) befestigt ist, und einen Arm (42), der an den Stiel (40) angebracht ist und sich radial von diesem erstreckt und ein distales Ende (44) aufweist, das zugeordnete Aufnehmeinrichtungen (26) zum Anheben eines Produkts (P) trägt, und
- Hilfs-Kinematikeinrichtungen (56, 58),die zwischen dem Stiel (40) und dem komplementären Elementen (22) derart angeordnet sind, dass eine Dreh-Ausrichtbewegung des Armes (42) und eine daraus folgende Bewegung der Aufnehmeinrichtung (26) entlang eines im Allgemeinen gekrümmten Pfades um die Achse des Stieles (40) der relativen axialen Gleitbewegung des Stieles (40) und des komplementären Elements (22) entspricht.

2. Vorrichtung nach Anspruch 1, **dadurch gekennzeichnet, dass** der Arm (42) eine feste Länge aufweist, so dass der gekrümmte Pfad im Wesentlichen durch die Länge des Armes (42) und die Größe der Ausrichtbewegung des Armes (42) als eine Folge der Axialbewegung des Stieles (40) identifiziert wird.

3. Vorrichtung nach Anspruch 1 oder 2, **dadurch gekennzeichnet, dass** die Hilfskinematikeinrichtungen einen Stift (56), einen Stiel (40) sowie wenigstens einen Kanal (58) aufweisen, der gleitend durch den Stift (56) in Eingriff ist.

4. Vorrichtung nach einem der Ansprüche 1 bis 3, **dadurch gekennzeichnet, dass** das komplementäre Element (22) durch eine Hülse (22) gebildet wird, welche darin den Stiel (24) mit einer Fähigkeit für ein relatives axiales Gleiten aufnimmt.

5. Vorrichtung nach Anspruch 3 und 4, **dadurch gekennzeichnet, dass** der Stift (56) durch den Stiel (40) tritt, wobei er in diametral entgegengesetzten Positionen bzgl. dessen vorsteht, und dadurch, dass das komplementäre Element in Form einer Hülse (22) mit zwei diametral entgegengesetzten Kanälen (58) versehen ist, die gleitend durch die Enden des Stiftes (56) in Eingriff sind.

6. Vorrichtung nach einem der vorangehenden Ansprüche, **dadurch gekennzeichnet, dass** der Stiel einen zugeordneten Kragenteil (46) trägt, der mit einem äußeren Kanal versehen ist, und dass der Stiel (40) zugeordnete Steuerungseinrichtungen (50-54) aufweist, die gleitend mit dem Kanal des Kragenteils zusammenwirken, um die axiale Gleitbewegung des Stieles (40) zu steuern.

7. Vorrichtung nach Anspruch 1 oder 6, **dadurch gekennzeichnet, dass** der Stiel (40) zugeordnete Motoreinrichtungen für die Steuerung der relativen axialen Gleitbewegung trägt, wobei die Motoreinrichtungen ein Fluid-Stellorgan (52) aufweisen.

8. Vorrichtung nach einem der vorangehenden Ansprüche, **dadurch gekennzeichnet, dass** die Aufnehmeinrichtung (26) Vakuum-Aufnehmeinrichtungen sind, und dass der Stiel (40) und der Arm (42) Durchgänge (27) für die Aufbringung eines Unterdruckniveaus auf die Vakuum-Aufnehmeinrichtungen (26) aufweisen.

9. Vorrichtung nach Anspruch 4, **dadurch gekennzeichnet, dass** der Aufnehmkopf (14) eine Basisplatte (20) aufweist, und dass die Hülse (22) an die Basisplatte (20) befestigt ist.

10. Vorrichtung nach einem der vorangehenden Ansprüche, **dadurch gekennzeichnet, dass** mehrere der Aufnehmelemente (24) in jeweiligen Gruppen (X, Y, Z) angeordnet sind, wobei die Aufnehmelemente (24) in jeder Gruppe zusammen zwischen wenigstens einer ersten relativen Anordnung zum Aufnehmen einer jeweiligen Gruppe von Produkten (P) und wenigstens einer zweiten relativen Anordnung zum Absetzen derselben Produkte (P) beweglich sind.

11. Vorrichtung nach einem der vorangehenden Ansprüche, **dadurch gekennzeichnet, dass** diese wenigstens ein weiteres Aufnehmelement (24) mit einer zugeordneten Aufnehmeinrichtung (26) aufweist, die derart gestaltet ist, dass sie ausschließlich die genannte relative Axialbewegung ausführt, ohne dass diese Bewegung entlang einer gekrümmten Bahn stattfindet.

12. Vorrichtung nach einem der vorangehenden Ansprüche, die dafür beabsichtigt ist, dass sie auf Produkte (P) wirkt, die in der Lage sind, in wenigstens ein Aufnahmegefäß (18X, 18Y, 18Z) eingeführt zu werden, **dadurch gekennzeichnet, dass** sie einen Aufnehmkopf (14) aufweist, an dem zusätzlich zu den Aufnehmelementen (24) wenigstens ein weiteres Hilfs-Aufnehmelement (29) angebracht ist, das in der Lage ist, mit dem wenigstens einem Gefäß zum Halten wenigstens eines Gefäßes (18X, 18Y, 18Z), in dem wenigstens ein Produkt (P), das durch das wenigstens eine Aufnehmelement (24) gehalten wird, aufgenommen ist, an dem Aufnehmelement (14) zusammenwirken.

13. Vorrichtung nach Anspruch 12, **dadurch gekennzeichnet, dass** das Hilfs-Aufnehmelement (29) vakuumbetätigt ist.

14. Vorrichtung nach Anspruch 9 und 12, **dadurch gekennzeichnet, dass** das Hilfs-Aufnehmelement (30) von der Basisplatte (20) zu einem Ausmaß vorsteht, das dem Abstand entspricht, den die Basisplatte (20) von einem flachen Kern des Gefäßes trennt, wobei die Produkte (P) in dem wenigstens einem Gefäß aufgenommen sind, wobei sich die Stiele (40) der Aufnehmelemente (24) in einer der Endstellungen der Ausdehnungs- und Rückführbewegung befinden.

15. Vorrichtung nach Anspruch 10 und 12, **dadurch gekennzeichnet, dass** jede der Gruppen (X, Y, W, Z) von Aufnehmelementen (24) wenigstens ein jeweiliges Hilfs-Aufnehmelement (30) zugeordnet ist, das in der Lage ist, mit einem jeweiligem Gefäß (18X, 18Y, 18W) zur Aufnahme der Produkte (P) in der jeweiligen Gruppe zusammenzuwirken.

16. Vorrichtung nach einem der vorangehenden Ansprüche, **dadurch gekennzeichnet, dass** die Aufnehmelemente (24) in einem Aufnehmkopf (14) mit zugeordneten Betätigungseinrichtungen (11, 12, 12a, 14a) angebracht sind, die wahlweise zwischen folgenden Stellungen steuerbar sind (K):
- wenigstens einer ersten Betätigungsstellung, in welcher das wenigstens eine Aufnehmelement (24), das in der wenigstens einen ersten Position angeordnet ist, eines der Produkte (P) anhebt, und
- wenigstens einer zweiten Betriebsstellung, in welcher das wenigstens eine Aufnehmelement (24), das in der wenigstens einen zweiten Position getragen wird, das jeweilige Produkt (P) absetzt.

17. Vorrichtung nach Anspruch 12 und 16, **dadurch gekennzeichnet, dass** die Betätigungseinrichtungen (11, 12, 12a, 14a) derart gestaltet sind, dass sie den Aufnehmkopf (14) während der Bewegung zwischen der ersten Betriebsstellung und der zweiten Betriebsstellung durch wenigstens eine Zwischen-Betriebsstellung (16) tragen, in der die Aufnehmelemente (24) die jeweiligen Produkte (P) in ein jeweiliges Aufnahmegefäß (18X, 18Y, 18Z) anordnen.

18. Vorrichtung nach Anspruch 12 und 17, **dadurch gekennzeichnet, dass** das Hilfs-Aufnehmelement (29) in der Zwischen-Betriebsstellung mit dem jeweiligen Gefäß (18X, 18Y, 18Z) in Eingriff ist.

19. Vorrichtung nach Anspruche 10 und 16, **dadurch gekennzeichnet, dass** die Betätigungseinrichtungen (11, 12, 12a, 14a) derart gestaltet sind, dass sie den Aufnehmkopf (14) zu wenigstens einer der ersten und zweiten Betriebsstellung derart bewegen, dass nachfolgend das Anheben und das Absetzen der Produkte (P) in den Gruppen erreicht wird.

20. Vorrichtung nach Anspruch 19, **dadurch gekennzeichnet, dass** die Betätigungseinrichtungen (11, 12, 12a, 14a) derart gestaltet sind, dass sie die Gruppen von Produkten in übereinander angeordneten Positionen absetzen.

21. Vorrichtung nach einem der Ansprüche 16, 19 oder 20, **dadurch gekennzeichnet, dass** der Aufnehmkopf (14) ferner wenigstens ein Aufnehmelement (24, 29) aufweist, das in der Lage ist, wahlweise ein Abdeckelement (D) anzuheben, um es auf die Produkte (P) abzusetzen, die gemäß den Betriebsstellungen abgesetzt sind.

## Revendications

1. Dispositif de prélèvement comprenant une tête de prélèvement (14) et une pluralité d'éléments de prélèvement (24) mobiles sélectivement relativement à la tête entre au moins des première et deuxième positions afin de permettre de soulever des produits (P) dans une première disposition spatiale relative et de déposer les produits (P) mêmes dans une deuxième disposition spatiale relative, **caractérisé en ce que** lesdits éléments de prélèvement (24) comprennent :
- une tige verticale (40) adaptée à un mouvement de coulissement axial relatif par rapport à un élément complémentaire (22) fixé à la tête (14) et un bras (42) monté sur ladite tige (40) et s'étendant radialement depuis elle et comportant une extrémité distale (44) supportant des moyens de prélèvement associés (26) pour soulever un produit (P), et
- un moyen cinématique secondaire (56, 58) disposé entre ladite tige (40) et ledit élément complémentaire (22) de manière qu'un mouvement d'orientation rotatif dudit bras (42) et un mouvement résultant dudit moyen de prélèvement associé (26) le long d'une trajectoire généralement arquée autour de l'axe de la tige (40) correspondent au mouvement de coulissement axial relatif de ladite tige (40) et dudit élément complémentaire (22).

2. Dispositif selon la revendication 1, **caractérisé en ce que** ledit bras (42) a une longueur fixe, de manière que ladite trajectoire arquée soit sensiblement identifiée par la longueur dudit bras (42) et l'ampleur du mouvement d'orientation dudit bras (42) en conséquence du mouvement axial de ladite tige (40).

3. Dispositif selon la revendication 1 ou la revendication 2, **caractérisé en ce que** ledit moyen cinématique secondaire comprend une goupille (56), une tige (40) ainsi qu'au moins un canal (58) engagé en coulissement par ladite goupille (56).

4. Dispositif selon l'une quelconque des revendications 1 à 3, **caractérisé en ce que** ledit élément complémentaire (22) est constitué d'un manchon (22) qui reçoit en son sein ladite tige (40) adaptée à un coulissement axial relatif.

5. Dispositif selon la revendication 3 et la revendication 4, **caractérisé en ce que** ladite goupille (56) traverse ladite tige (40) en se projetant en des positions diamétralement opposées par rapport à celle-ci, et **en ce que** ledit élément complémentaire sous la forme d'un manchon (22) est doté de deux canaux diamétralement opposés (58) engagés en coulissement par les extrémités de ladite goupille (56).

6. Dispositif selon l'une quelconque des revendications précédentes, **caractérisé en ce que** ladite tige supporte une partie formant collerette associée (46) dotée d'un canal externe, et **en ce que** ladite tige (40) comporte un moyen de commande associé (50 à 54) coopérant en coulissement avec le canal de ladite partie formant collerette afin de commander le mouvement de coulissement axial de ladite tige (40).

7. Dispositif selon la revendication 1 ou la revendication 6, **caractérisé en ce que** ladite tige (40) supporte un moyen de moteur associé pour commander ledit mouvement de coulissement axial relatif, ledit moyen de moteur comprenant un actionneur à fluide (52).

8. Dispositif selon l'une quelconque des revendications précédentes, **caractérisé en ce que** lesdits moyens de prélèvement (26) sont des moyens de prélèvement à vide, et **en ce que** ladite tige (40) et ledit bras (42) comportent des passages (27) pour l'application d'un niveau de pression négative sur lesdits moyens de prélèvement à vide (26).

9. Dispositif selon la revendication 4, **caractérisé en ce que** ladite tête de prélèvement (14) comporte une plaque de base (20), et **en ce que** ledit manchon (22) est fixé à ladite plaque de base (20).

10. Dispositif selon l'une quelconque des revendications précédentes, **caractérisé en ce qu'**une pluralité desdits éléments de prélèvement (24) est agencée en des groupes respectifs (X, Y, Z), les éléments de prélèvement (24) dans chaque groupe étant mobiles collectivement entre au moins un premier agencement relatif pour prélever un groupe respectif de produits (P) et au moins un deuxième agencement relatif pour déposer les produits (P) mêmes.

11. Dispositif selon l'une quelconque des revendications précédentes, **caractérisé en ce qu'**il comprend au moins un autre élément de prélèvement (24) comportant un moyen de prélèvement associé respectif (26) configuré pour effectuer exclusivement ledit mouvement axial relatif sans que ce mouvement se fasse le long d'une trajectoire arquée.

12. Dispositif selon l'une quelconque des revendications précédentes, destiné à agir sur des produits (P) adaptés à être introduits dans au moins un réceptacle (18X, 18Y, 18Z), **caractérisé en ce qu'**il comprend une tête de prélèvement (14) sur laquelle il est monté, en plus desdits éléments de prélèvement (24), au moins un élément de prélèvement auxiliaire supplémentaire (29) adapté à coopérer avec ledit au moins un réceptacle pour maintenir sur ladite tête de prélèvement (14) au moins un réceptacle (18X, 18Y, 18Z) dans lequel au moins un produit (P) maintenu par ledit au moins un élément de prélèvement (24) est reçu.

13. Dospositif selon la revendication 12, **caractérisé en ce que** ledit élément de prélèvement auxiliaire (29) est actionné par vide.

14. Dispositif selon la revendication 9 et la revendication 12, **caractérisé en ce que** ledit élément de prélèvement auxiliaire (30) se projette depuis ladite plaque de base (20) sur une longueur correspondant à la distance séparant ladite plaque de base (20) d'un coeur plat dudit réceptacle avec lesdits produits (P) reçus dans ledit au moins un réceptacle, les tiges (40) desdits éléments de prélèvement (24) étant dans l'une des positions de fin desdits mouvements de déploiement et de retour.

15. Dispositif selon la revendication 10 et la revendication 12, **caractérisé en ce qu'**à chacun desdits groupes (X, Y, W, Z) des éléments de prélèvement (24) est associé au moins un élément de prélèvement auxiliaire respectif (30) adapté à coopérer avec un réceptacle respective (18X, 18Y, 18W) pour recevoir les produits (P) dans le groupe respectif.

16. Dispositif selon l'une quelconque des revendications précédentes, **caractérisé en ce que** lesdits éléments de prélèvement (24) sont montés sur une tête de prélèvement (14) avec des moyens d'actionnement associés (11, 12, 12a, 14a) adaptés à être sélectivement commandés (K) entre :
- au moins une première position opérante dans laquelle ledit au moins un élément de prélèvement (24) situé dans ladite au moins une première position soulève l'un desdits produits (P), et
- au moins une deuxième position opérante dans laquelle ledit au moins un élément de prélèvement (24), porté dans ladite au moins une deuxième position, dépose le produit respectif (P).

17. Dispositif selon la revendication 12 et la revendication 16, **caractérisé en ce que** lesdits moyens d'actionnement (11, 12, 12a, 14a) sont configurés pour porter ladite tête de prélèvement (14) durant le mouvement entre ladite première position opérante et ladite deuxième position opérante via au moins une position opérante intermédiaire (16) dans laquelle lesdits éléments de prélèvement (24) placent les produits respectifs (P) dans un réceptacle respectif (18X, 18Y, 18Z).

18. Dispositif selon la revendication 12 et la revendication 17, **caractérisé en ce que** dans ladite position opérante intermédiaire, ledit élément de prélèvement auxiliaire (29) engage ledit réceptacle respectif (18X, 18Y, 18Z).

19. Dispositif selon la revendication 10 et la revendication 16, **caractérisé en ce que** lesdits moyens d'actionnement (11, 12, 12a, 14a) sont configurés pour déplacer ladite tête de prélèvement (14) jusqu'au moins l'une desdites première et deuxième positions opérantes, de manière à réaliser en conséquence le soulèvement et le dépôt des produits (P) dans lesdits groupes.

20. Dispositif selon la revendication 19, **caractérisé en ce que** lesdits moyens d'actionnement (11, 12, 12a, 14a) sont configurés de manière à déposer lesdits groupes de produits en des positions superposées.

21. Dispositif selon l'une quelconque des revendications 16, 19 ou 20, **caractérisé en ce que** ladite tête de prélèvement (14) comprend également au moins un élément de prélèvement (24, 29) adapté à soulever sélectivement un élément formant couvercle (D) afin de le déposer sur les produits (P) déposés en correspondance de ladite position opérante.
